# EUROPÄISCHE PATENTSCHRIFT

(11) **EP 3 651 589 B1**
(45) Veröffentlichungstag und Bekanntmachung des Hinweises auf die Patenterteilung: **28.04.2021**
(21) Anmeldenummer: 19739976.9
(22) Anmeldetag: 11.07.2019
(51) Int. Cl.: A23P 20/13, A23L 7/191, A23L 7/187

(54) **VERFAHREN UND VORRICHTUNG ZUR WEITERVERARBEITUNG EINES GEPUFFTEN LEBENSMITTELS AUF BASIS AUFPOPPBARER SAMEN**
METHOD AND DEVICE FOR FURTHER PROCESSING A PUFFED FOODSTUFF BASED ON POPPABLE SEEDS
PROCÉDÉ ET DISPOSITIF DE TRANSFORMATION ULTÉRIEURE D'UN ALIMENT SOUFFLÉ À BASE DE GRAINES POUVANT ÉCLATER

(30) Priorität: 12.07.2018 DE 102018005486
(43) Veröffentlichungstag der Anmeldung: 20.05.2020
(73) Patentinhaber: Tiede, Andreas, 21435 Stelle (DE)
(72) Erfinder: Tiede, Andreas, 21435 Stelle (DE)
(74) Vertreter: Hofmeister, Frank
(86) Internationale Anmeldenummer: PCT/EP2019/068684
(87) Internationale Veröffentlichungsnummer: WO 2020/011924

(56) Entgegenhaltungen:
- EP-A1- 0 608 950
- EP-A1- 2 201 845
- WO-A1-2014/039007
- DE-A1- 10 236 906
- US-A- 3 141 776
- US-A- 3 830 941
- US-A- 5 688 543
- US-A1- 2011 203 520

## Beschreibung

Die Erfindung betrifft ein Verfahren zur Weiterverarbeitung eines gepufften Lebensmittels auf Basis aufpoppbarer Samen.

Unter dem Puffen von Lebensmitteln versteht man das Erhitzen von Samen, damit das in den Samenkörnern enthaltende Wasser durch plötzliche Druckverringerung explosionsartig verdampft. Die heiße gequollene Stärke der Samenkörner schäumt dabei auf ein Vielfaches ihres ursprünglichen Volumens auf und erstarrt in diesem Zustand. Das Puffen der Samen kann mit Hitze und Druck oder bei bestimmten Samenarten auch nur durch Erhitzen erfolgen.

Die bekanntesten gepufften Lebensmittel sind Popcorn (Puffmais) und Puffreis. Bei der Herstellung von Popcorn aus einem speziellen Puffmais erfolgt das Puffen allein durch Erhitzen. Die Samenhüllen des Puffmaises halten einem hohen Innendruck stand, bevor die Samenhülle aufreißt und das schlagartige Expandieren der in den Samenkörnern enthaltenden Stärke ermöglicht.

Aus der WO 2014/039007 A1 ist ein Verfahren zur Herstellung von pikantem Popcorn bekannt. Bei diesem bekanten Verfahren werden die aufgepoppten Samen zur Weiterverarbeitung auf 140 °C erhitzt, also eine Temperatur deutlich unterhalb der eigentlichen Betriebstemperatur zum Aufpoppen der Samen.

Weiterhin ist eine Maschine zur kontinuierlichen Herstellung von Popcorn beispielsweise aus der US 2018/0139989 A1 bekannt. Ausgehend von der chargenweisen Popcorn-Herstellung in Kesseln, soll mit dieser Popcorn-Maschine ein kontinuierlicher Herstellungsprozess zur Erzeugung von hochwertigem Popcorn bewerkstelligt werden.

Diese bekannte Popcorn-Maschine weist ein Gehäuse auf, in dem eine Förderschnecke angeordnet ist, um die aufzupoppenden Maiskörner in einem kontinuierlichen Prozess in Längsrichtung des Gehäuses zu fördern. Innerhalb des Gehäuses sind zwei Heizzonen ausgebildet, die mit verschiedenen Temperaturprofilen betreibbar sind. Gerade die Ausbildung der zwei Heizzonen ermöglicht das kontinuierliche und gleichmäßige Aufpoppen der Maiskörner von der eher kühleren Aufgabezone hin zur wärmeren Ausgabezone für die vollständig aufgepoppten Maiskörner.

Die aufgepoppten Samen mit ihrer sehr großen äußeren Oberfläche nehmen sehr leicht Feuchtigkeit auf, weshalb es schwierig ist, diese bereits aufgepoppten Samen weiterzuverarbeiten.

Davon ausgehend liegt der Erfindung die **Aufgabe** zugrunde, ein Verfahren zu schaffen, das eine Weiterverarbeitung bereits aufgepoppter Samen ermöglicht.

Die **Lösung** dieser Aufgabenstellung ist erfindungsgemäß gekennzeichnet durch die Verfahrensschritte:
a) schlagartiges Erhitzen der aufgepoppten Samen innerhalb von etwa 30 Sekunden auf eine Röst-Betriebstemperatur zum Rösten der aufgepoppten Samen, wobei die Röst-Betriebstemperatur wenigstens 50% oberhalb der zum Aufpoppen der Samen erforderlichen Betriebstemperatur liegt und
b) schlagartiges Abschrecken der aufgepoppten und gerösteten Samen auf eine Temperatur unterhalb von 10°C innerhalb von etwa 30 Sekunden zum Beenden des Röstvorgangs.

Bei dem schlagartigen Erhitzen der im ersten Verfahrensschritt der bereits aufgepoppten Samen verschließt sich die äußere Oberfläche der aufgepoppten Samen zu einer Art Kokon, der nicht mehr dazu neigt, Feuchtigkeit in das Innere der aufgepoppten Samen durchzuleiten.

Dieser Röstvorgang, wird bei einer Röst-Betriebstemperatur durchgeführt wird, die wenigstens 50% oberhalb der zum Aufpoppen der Samen erforderlichen Betriebstemperatur liegt. Vorteilhafterweise ist die Röst-Betriebstemperatur in etwa doppelt so hoch ist wie die zum Aufpoppen der Samen erforderlichen Betriebstemperatur. Schlagartiges Erhitzen bedeutet hierbei, dass die aufgepoppten Samen innerhalb weniger Sekunden, vorzugsweise innerhalb von etwa 30 Sekunden, der Röst-Betriebstemperatur ausgesetzt werden, um ein Vertrocknen der aufgepoppten Samen zu verhindern. Der Röstvorgang bei der Röst-Betriebstemperatur erfolgt nur für eine kurze Zeitspanne von etwa 3 Minuten.

Durch das schlagartige Abkühlen der aufgepoppten und gerösteten Samen auf eine Temperatur unterhalb von 10°C wird der Röstvorgang gestoppt. Auch hier bedeutet schlagartig, dass der Temperaturwechsel innerhalb weniger Sekunden, vorzugsweise innerhalb von etwa 30 Sekunden, erfolgt.

Durch das Verschließen der äußeren Oberfläche der aufgepoppten Samen in den Verfahrensschritten a) und b) ist es erstmalig möglich, aufgepoppte Samen einer Weiterverarbeitung zu unterziehen, ohne das die Gefahr besteht, dass die aufgepoppten Samen sich entweder voll Feuchtigkeit saugen und/oder zusammenfallen.

Die aufgepoppten und gerösteten Samen sind nach dem Verfahrensschritt b) so stabil, dass diese problemlos weiteren Verfahrensschritten zugeführt werden können.

Mit einer bevorzugten Ausführungsform des erfindungsgemäßen Verfahrens wird vorgeschlagen, dass sich an die Verfahrensschritte a) und b) zusätzlich folgende weiteren Verfahrensschritte anschließen:
c) Befeuchten der äußeren Oberfläche der aufgepoppten und gerösteten Samen;
d) Aufbringen einer Panade auf die befeuchtete äußere Oberfläche der aufgepoppten und gerösteten Samen;
e) Frittieren der aufgepoppten, gerösteten und panierten Samen in heißem Fett und
f) Aufbringen eines oder mehrerer Gewürze auf die äußere Oberfläche der aufgepoppten, gerösteten, panierten und frittierten Samen.

Erst durch das erfindungsgemäße Verschließen der äußeren Oberfläche der aufgepoppten Samen in den Verfahrensschritten a) und b) ist es möglich, die aufgepoppten Samen entsprechend weiterzuverarbeiten.

Gemäß einer praktischen Ausführungsform des erfindungsgemäßen Verfahrens wird vorgeschlagen, dass die aufgepoppten, gerösteten und panierten Samen vor dem Frittieren im Verfahrensschritt e) getrocknet werden. Das Antrocknen der Panade lässt diese besser an den aufgepoppten, gerösteten und befeuchteten Samen haften, so dass die Panade beim nachfolgenden Frittieren vom heißen Frittierfett nicht abgeschwemmt wird.

Das Befeuchten der äußeren Oberfläche der aufgepoppten und gerösteten Samen im Verfahrensschritt c) erfolgt erfindungsgemäß vorzugsweise mittels einer Eimasse, die aufgrund des enthaltenen Eiweißes einen guten Halt der nachfolgend aufzubringenden Panade gewährleistet.

Schließlich wird mit dem erfindungsgemäßen Verfahren vorgeschlagen, dass als aufgepoppte Samen Maiskörner, vorzugsweise Puffmaiskörner, verwendet werden. Puffmais hat den Vorteil, dass dieser schon beim Aufpoppen große und stabile aufgepoppte Samenkörper bildet, die gegenüber kleineren Samen, wie beispielsweise Puffreis, die weitere Verarbeitung erleichtern.

Das Rösten und Abschrecken der Samen in den Verfahrensschritten a) und b) erfolgt in einer rotierenden Siebtrommel, die mit Heiz- und Kühleinrichtungen versehen und/oder gekoppelt ist. Rotierende Siebtrommeln zeichnen sich dadurch aus, dass sie bei einfachem Aufbau eine gute Umwälzung und Durchmischung der in der Siebtrommel angeordneten Produkte gewährleisten. Aufgrund der siebartig durchbrochenen Außenstruktur der Siebtrommel eignet sich diese sehr gut zum Erwärmen und Kühlen von Produkten, da die Warm- und Kaltluft nahezu ungehindert auf die zu behandelnden Produkte trifft.

Das Befeuchten der äußeren Oberfläche der aufgepoppten und gerösteten Samen im Verfahrensschritt c) erfolgt in einer rotierenden Siebtrommel, der das zur Befeuchtung erforderliche Fluid über Einspritzdüsen zuführbar ist. Die Verwendung von Einspritzdüsen ermöglicht es, das zum Befeuchten verwendete Fluid sehr fein zu verteilen, so dass die aufgepoppten und gerösteten Samen in einem Fluidnebel rundum befeuchtet werden.

Um die aufgepoppten, gerösteten und befeuchteten Samen im Verfahrensschritt d) rundum zu panieren, erfolgt das Aufbringen der Panade auf einem Vibrationsförderband. Durch die Vibrationen des Vibrationsförderbandes werden die zu panierenden aufgepoppten, gerösteten und befeuchteten Samen einerseits vereinzelt und andererseits zusätzlich fortlaufend umgewälzt, so dass ein rundum gleichmäßiges Aufbringen der Panade gewährleistet ist.

Zum Frittieren der der aufgepoppten, gerösteten und panierten Samen in heißem Fett im Verfahrensschritt e) erfolgt das Frittieren in einem über einen Deckel verschließbaren Kessel, der mit Einlassöffnungen für das Frittierfett versehen ist. Durch das Verschließen des Kessels mit einem Deckel, der beim Frittieren bis unter die Oberfläche des Frittierfetts reicht, wird ein Aufschwimmen des Frittierguts verhindert.

Das optional durchzuführende Antrocknen der Panade vor dem Frittieren erfolgt mittels Infrarot-Wärmestrahlern. Die aufgepoppten, gerösteten und panierten Samen werden hierzu vorteilhafterweise über ein Vibrationsförderband entlang der Infrarot-Wärmestrahler transportiert, um ein allseitiges Antrocknen der Panade zu ermöglichen.

Das Aufbringen eines oder mehrerer Gewürze auf die äußere Oberfläche der aufgepoppten, gerösteten, panierten und frittierten Samen im Verfahrensschritt f) erfolgt in einer rotierenden Siebtrommel. Als Gewürze und/oder Gewürzmischungen sind alle gängigen Gewürze und Gewürzmischungen verwendbar, wie diese beispielsweise auch bei der Herstellung von Kartoffel-Chips Verwendung finden.

Weitere Merkmale und Vorteile der Erfindung ergeben sich anhand der zugehörigen Zeichnungen, in denen ein Ausführungsbeispiel einer Vorrichtung zur Durchführung des erfindungsgemäßen Verfahrens zur Weiterverarbeitung eines gepufften Lebensmittels auf Basis aufpoppbarer Samen nur beispielhaft dargestellt ist, ohne die Erfindung auf dieses Ausführungsbeispiel zu beschränken. In den Zeichnungen zeigt:
- Fig. 1: eine schematische Darstellung einer Siebtrommel zur Durchführung der Verfahrensschritte a) und b);
- Fig. 2: eine schematische Darstellung einer Siebtrommel zur Durchführung des Verfahrensschrittes c);
- Fig. 3: eine schematische Darstellung eines Vibrationsförderbandes zur Durchführung des Verfahrensschrittes d);
- Fig. 4: eine schematische Darstellung von Infrarot-Wärmestrahlern zum Antrocknen der Panade vor dem Verfahrensschritt e);
- Fig. 5: eine schematische Darstellung einer Fritteuse zur Durchführung des Verfahrensschrittes e) und
- Fig. 6: eine schematische Darstellung einer Siebtrommel zur Durchführung des Verfahrensschrittes f).

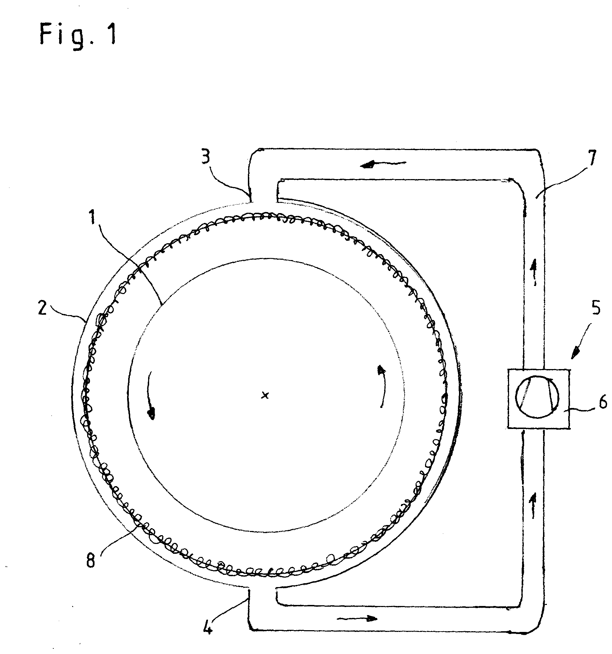

Die Abbildung Fig. 1 zeigt eine Vorrichtung zur Weiterverarbeitung eines gepufften Lebensmittels auf Basis aufpoppbarer Samen, bestehend aus einer rotierbaren Siebtrommel 1, die von einem Gehäuse 2 umschlossenen ist. Zum Zu- und Ableiten von Heiß- und Kaltluft weist das Gehäuse 2 wenigstens einen Einlassstutzen 3 sowie wenigstens einen Auslassstutzen 4 auf, über die mittels einer externen Heiz- und Kühleinrichtung 5 heiße und kalte Luft in das Innere des Gehäuses 2 einleitbar bzw. aus diesem heraussaugbar ist.

Bei der dargestellten Ausführungsform ist die externe Heiz- und Kühleinrichtung 5 als Gebläse 6 ausgebildet ist, wobei das Gebläse 6 und der wenigstens eine Einlassstutzen 3 und der wenigstens eine Auslassstutzen 4 über Rohleitungen 7 oder Schläuche miteinander verbunden sind. Zusätzlich zu der als Gebläse 6 ausgebildeten externen Heiz- und Kühleinrichtung 5 ist im Inneren des Gehäuses 2 eine die Siebtrommel 1 umgebende Heizeinrichtung 8 angeordnet, die beispielsweise als Heizspirale, ausgebildet sein kann.

Das Weiterverarbeiten gepuffter Lebensmittel mittels der in Fig. 1 dargestellten Vorrichtung wird nachfolgend anhand des Beispiels Popcorn aus speziellem Puffmais erläutert.

In dem in den Maiskörnern enthaltenden stärkehaltigen Speichergewebe ist Wasser gebunden, das beim Aufpoppen durch Heißluft erhitzt wird. Die Samenhüllen des Puffmais halten beim Erhitzen des eingelagerten Wassers einem hohen Innendruck stand, so dass bei steigenden Innendruck das Wasser erst bei einer Temperatur von etwa 200 °C seinen Aggregatzustand von flüssig in gasförmig ändert. Aufgrund des größeren Volumens des entstehenden Wasserdampfes reißt die Samenhülle auf und die durch Hitze und Druck aufgeweichte Stärke dehnt sich in einer schaumigen Struktur explosionsartig aus, kühlt augenblicklich ab und erstarrt.

Diese aufgepoppten Samen mit ihrer sehr großen äußeren Oberfläche nehmen sehr leicht Feuchtigkeit auf, weshalb es schwierig ist, aufgepoppte Samen weiterzuverarbeiten.

Zu Beginn des Verfahrens wird die in dem Gehäuse 2 angeordnete rotierbare Siebtrommel 1 mit bereits aufgepoppten Maiskörnern befüllt. Dann wird das Gehäuse 2 verschlossen und die Siebtrommel 1 in Rotationsbewegung versetzt.

Im ersten Verfahrensschritt wird das Innere des Gehäuses 2 mit den in der Siebtrommel 1 angeordneten aufgepoppten Maiskörnern über die im Inneren des Gehäuses 2 angeordnete Heizeinrichtung 8 schlagartig aufgeheizt.

Bei dem schlagartigen Erhitzen der bereits aufgepoppten Maiskörner verschließt sich die äußere Oberfläche der aufgepoppten Maiskörner zu einer Art Kokon, der nicht mehr dazu neigt, Feuchtigkeit in das Innere der aufgepoppten Maiskörner durchzuleiten.

Dieser Röstvorgang, wird bei einer Röst-Betriebstemperatur durchgeführt wird, die wenigstens 50% oberhalb der zum Aufpoppen der Maiskörner erforderlichen Betriebstemperatur liegt. Vorteilhafterweise ist die Röst-Betriebstemperatur mit etwa 380 °C in etwa doppelt so hoch ist wie zum Aufpoppen der Maiskörner erforderliche Betriebstemperatur von etwa 200 °C. Schlagartiges Erhitzen bedeutet hierbei, dass die aufgepoppten Maiskörner innerhalb weniger Sekunden, vorzugsweise innerhalb von etwa 30 Sekunden, der Röst-Betriebstemperatur ausgesetzt werden, um ein Vertrocknen der aufgepoppten Maiskörner zu verhindern. Der Röstvorgang bei der Röst-Betriebstemperatur erfolgt nur für eine kurze Zeitspanne von etwa 3 Minuten.

Im nachfolgenden zweiten Verfahrensschritt wird die im Inneren des Gehäuses 2 angeordnete Heizeinrichtung 8 abgeschaltet und die in der Siebtrommel 1 angeordneten aufgepoppten und gerösteten Maiskörner schlagartig abgeschreckt. Hierzu wird über die als Gebläse 6 ausgebildete externe Heiz- und Kühleinrichtung 5 Kaltluft in das Inneren des Gehäuses 2 geblasen.

Durch das schlagartige Abkühlen der aufgepoppten und gerösteten Maiskörner auf eine Temperatur unterhalb von 10°C wird der Röstvorgang gestoppt. Auch hier bedeutet schlagartig, dass der Temperaturwechsel innerhalb weniger Sekunden, vorzugsweise innerhalb von etwa 30 Sekunden, erfolgt.

Durch das Verschließen der äußeren Oberfläche der aufgepoppten Maiskörner in den Verfahrensschritten eins und zwei ist es möglich, aufgepoppte Maiskörner einer Weiterverarbeitung zu unterziehen, ohne das die Gefahr besteht, dass die aufgepoppten Maiskörner sich entweder voll Feuchtigkeit saugen und/oder zusammenfallen.

Die aufgepoppten und gerösteten Maiskörner sind nach dem zweiten Verfahrensschritt so stabil, dass diese problemlos weiteren Verfahrensschritten zur Weiterverarbeitung bzw. Veredlung zugeführt werden können.

Alternativ zu dem zuvor beschriebenen Verfahren, bei dem die Siebtrommel 1 von außen mit bereits aufgepoppten Maiskörner befüllt wird, ist die in Fig. 1 dargestellte Vorrichtung auch dazu geeignet, dass das Aufpoppen der Maiskörner an sich in dieser Siebtrommel 1 durchgeführt werden kann. Die Weiterverarbeitung der aufgepoppten Maiskörner erfolgt dann wie zuvor und nachfolgend beschriebe

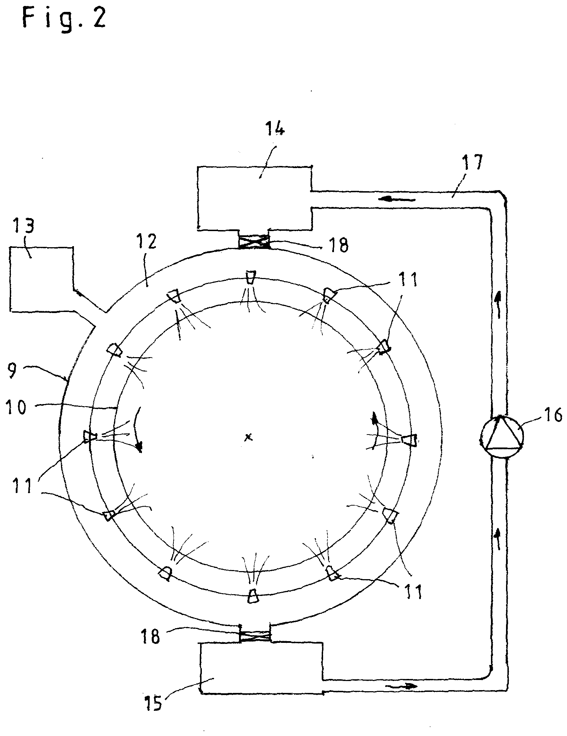

In den Abbildungen Fig. 2 bis Fig. 6 sind einzelne Komponenten einer Vorrichtung zur Weiterverarbeitung eines auf Basis aufpoppbarer Samen hergestellten Lebensmittels in der Reihenfolge der Verwendung während der Weiterverarbeitung dargestellt.

Die Weiterbehandlung der wie zuvor beschrieben hergestellten aufgepoppten und gerösteten Maiskörner erfolgt anhand folgender Verfahrensschritte:
- Befeuchten der äußeren Oberfläche der aufgepoppten und gerösteten Maiskörner;
- Aufbringen einer Panade auf die befeuchtete äußere Oberfläche der aufgepoppten und gerösteten Maiskörner;
- Frittieren der aufgepoppten, gerösteten und panierten Maiskörner in heißem Fett und
- Aufbringen eines oder mehrerer Gewürze auf die äußere Oberfläche der aufgepoppten, gerösteten, panierten und frittierten Maiskörner.

Das Befeuchten der äußeren Oberfläche der aufgepoppten und gerösteten Maiskörner erfolgt, wie in Fig. 2 dargestellt, in einer in einem Gehäuse 9 angeordneten rotierenden Siebtrommel 10, der das zur Befeuchtung erforderliche Fluid, wie beispielsweise Eimasse, über Einspritzdüsen 11 zugeführt wird. Die Verwendung von Einspritzdüsen ermöglicht es, das zum Befeuchten verwendete Fluid sehr fein zu verteilen, so dass die aufgepoppten und gerösteten Maiskörner in der rotierenden Siebtrommel 10 in einem Fluidnebel rundum befeuchtet werden. Das stetige Umwälzen der befeuchteten aufgepoppten und gerösteten Maiskörner in der rotierenden Siebtrommel 10 verhindert zudem ein Verkleben der Maiskörner.

Wie aus Fig. 2 ersichtlich, ist im Gehäuse 9 ein die Siebtrommel 10 umgebender ringförmiger Druckraum 12 ausgebildet, der über ein externes Druckluftreservoir 13 mit Druckluft beaufschlagt werden kann. Das zum Befeuchten der aufgepoppten und gerösteten Maiskörner erforderliche Fluid wird über einen Vorratsbehälter 14 in den Druckraum 12 des Gehäuses 9 eingespeist und über die ringförmig um die rotierende Siebtrommel 10 angeordneten Einspritzdüsen 11 in die Siebtrommel 10 gespritzt.

Überschüssiges Fluid wird in einem Auffangbehälter 15 aufgefangen und mittels einer externen Pumpe 16 über eine Rohrleitung 17 zurück in den Vorratsbehälter 14 gepumpt, so dass ein geschlossener Kreislauf entsteht. Die Zugänge des Vorratsbehälters 14 sowie des Auffangbehälters 15 zum Druckraum 12 sind über Ventile 18 verschließbar, um einen konstanten Einspritzdruck innerhalb des Druckraums 12 zu gewährleisten.

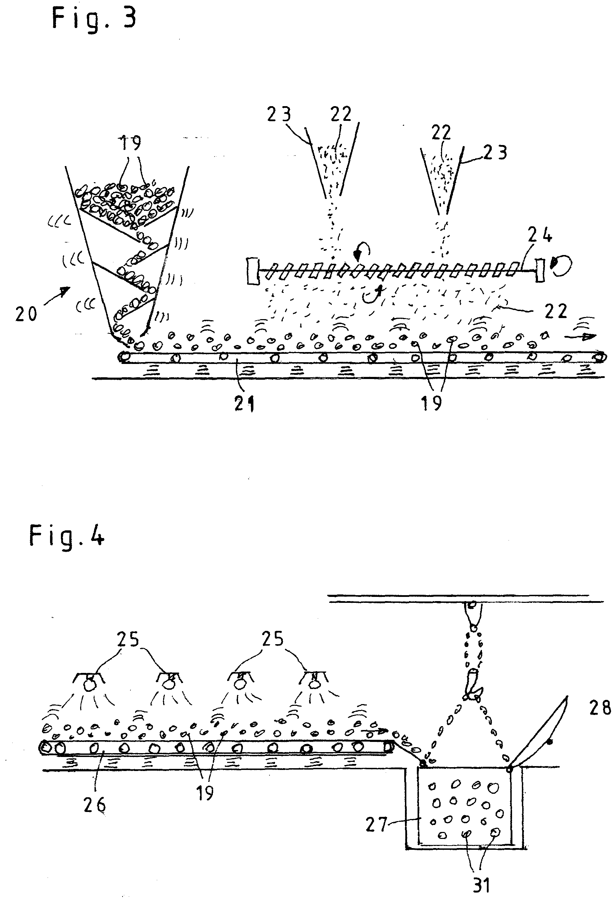

Im in Fig. 3 dargestellten nachfolgenden Verfahrensschritt werden die aufgepoppten, gerösteten und befeuchteten Maiskörner 19 mit einem Panadeüberzug versehen.

Um die aufgepoppten, gerösteten und befeuchteten Maiskörner 19 rundum zu panieren, werden diese zunächst mittels einer Vereinzelungsvorrichtung 20, wie beispielsweise einem Vibrationswendelförderer oder einem kaskadenförmigen Trichter, separiert und von dort aus einem Vibrationsförderband 21 zugeführt auf dem das Aufbringen einer Panade 22 erfolgt.

Die Panade 22 wird ausgehend von über dem Vibrationsförderband 21 angeordneten Vorratsbehältern 23 einer Förderschnecke 24 zugeführt, die die Panade 22 gleichmäßig über die Länge des Vibrationsförderbandes 21 verteilt.

Durch die Vibrationen des Vibrationsförderbandes 21 werden die zu panierenden aufgepoppten, gerösteten und befeuchteten Maiskörner 19 einerseits vereinzelt und andererseits zusätzlich fortlaufend umgewälzt, so dass ein rundum gleichmäßiges Aufbringen der Panade 22 gewährleistet ist, wobei Panaden 22 aller Art, wie beispielsweise Paniermehl, Semmelbrösel sowie Mehl und dergleichen, verwendbar sind.

Die Abbildung Fig. 4 zeigt einen optional durchführbaren Verfahrensschritt, bei dem die Maiskörner 19, nachdem diese mit der Panade 22 überzogen wurden, mittels Infrarot-Wärmestrahlern 25 getrocknet werden, um ein allseitiges Antrocknen der Panade zu ermöglichen. Die aufgepoppten, gerösteten und panierten Maiskörner 19 werden hierzu über ein Vibrationsförderband 26 entlang der oberhalb des Vibrationsförderbandes 26 angeordneten Infrarot-Wärmestrahler 25 transportiert.

Das in Fig. 4 dargestellte Antrocknen der Panade 22 ist nicht zwingend erforderlich, jedoch vorteilhaft, um ein Abschwemmen der Panade 22 beim nachfolgenden Verfahrensschritt des Frittierens zu verhindern.

Bei der in Fig. 4 dargestellten Vorrichtungsanordnung werden die aufgepoppten, gerösteten und mit der angetrockneten Panade 22 versehenen Maiskörner 19 am Ende des Vibrationsförderbandes 26 in einen zum Frittieren geeigneten Kessel 27 gefüllt, der über einen Deckel 28 verschließbar ist.

Für den Fall, dass auf den Verfahrensschritt des Antrocknens der Panade 22 unter den Infrarot-Wärmestrahlern 25 verzichtet werden kann, erfolgt das Befüllen des Kessels 27 mit den aufgepoppten, gerösteten und panierten Maiskörner 19 am Ende des in Fig. 3 dargestellten Vibrationsförderbandes 21.

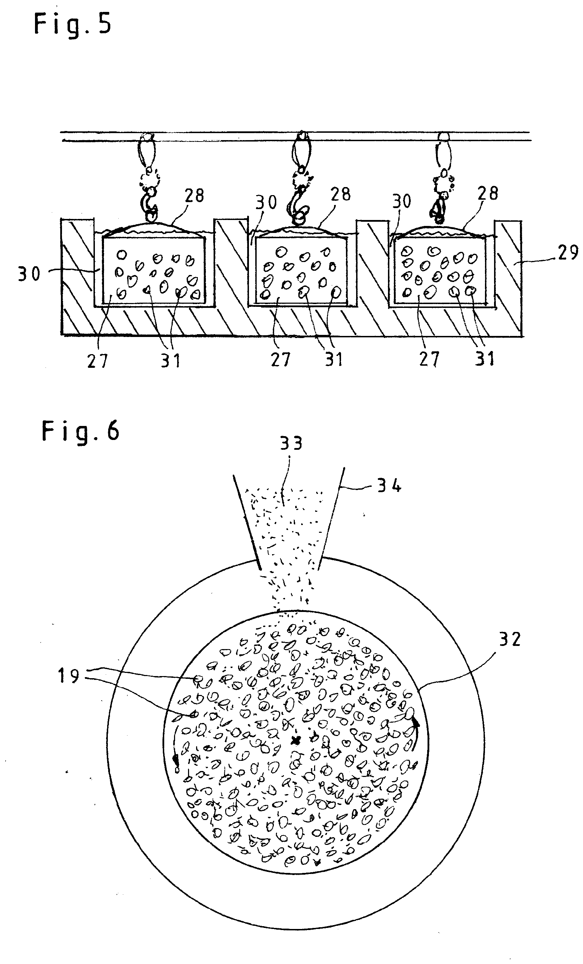

Im in Fig. 5 dargestellten nachfolgenden Verfahrensschritt wird der mit den aufgepoppten, gerösteten und panierten Maiskörnern 19 gefüllte Kessel 27 einer Fritteuse 29 zugeführt.

Bei der dargestellten Ausführungsform der Fritteuse 29 können gleichzeitig drei mit aufgepoppten, gerösteten und panierten Maiskörnern 19 gefüllte Kessel 27 in der Fritteuse 29 frittiert werden. Zum Durchtritt des heißen Frittierfetts 30 in das Innere der Kessel 27 weisen die Kessel 27 Einlassöffnungen 31 auf, durch die das Frittierfett 30 gleichmäßig und schnell mit den zu frittierenden Maiskörnern 19 in Kontakt treten kann.

Durch das Verschließen des Kessels 27 mit dem Deckel 28, der beim Frittieren bis unter die Oberfläche des Frittierfetts 30 reicht, wird ein Aufschwimmen der zu frittierenden aufgepoppten, gerösteten und panierten Maiskörner 19 verhindert.

In dem in Fig. 6 dargestellten abschließenden Verfahrensschritt werden die aufgepoppten, gerösteten, panierten und frittierten Maiskörner 19 gewürzt.

Das Aufbringen eines oder mehrerer Gewürze auf die äußere Oberfläche der aufgepoppten, gerösteten, panierten und frittierten Maiskörner 19 erfolgt in einer rotierenden Siebtrommel 32, der ein Gewürz 33 oder eine Gewürzmischung über einen Trichter 34 zugeführt wird.

Als Gewürze und/oder Gewürzmischungen sind alle gängigen Gewürze und Gewürzmischungen von absolut pikant bis absolut süß verwendbar sowie solche, wie diese beispielsweise auch bei der Herstellung von Kartoffel-Chips Verwendung finden.

Das Aufbringen des Gewürzes 33 oder der Gewürzmischung erfolgt vorteilhafterweise erst nach dem Frittieren und nicht schon mit dem Aufbringen der Panade 22, da die Gewürze 33 in der Regel beim Frittieren verbrennen und/oder ihren Geschmack verlieren.

Das voranstehend beschriebene Verfahren zur Weiterverarbeitung eines gepufften Lebensmittels auf Basis aufpoppbarer Samen zeichnet sich dadurch aus, dass durch das kokonartige Verschließen der äußeren Oberfläche der aufgepoppten Samen in den Verfahrensschritten Rösten und Abschrecken eine Außenhaut der aufgepoppten Samen geschaffen wird, die eine Weiterbehandlung der aufgepoppten Samen ohne die Gefahr der Feuchtigkeitsaufnahme ermöglicht.

### Bezugszeichenliste

- 1: Siebtrommel
- 2: Gehäuse
- 3: Einlassstutzen
- 4: Auslassstutzen
- 5: Heiz- und Kühleinrichtung
- 6: Gebläse
- 7: Rohrleitung
- 8: Heizeinrichtung
- 9: Gehäuse
- 10: Siebtrommel
- 11: Einspritzdüse
- 12: Druckraum
- 13: Druckluftreservoir
- 14: Vorratsbehälter
- 15: Auffangbehälter
- 16: Pumpe
- 17: Rohrleitung
- 18: Ventil
- 19: Maiskörner
- 20: Vereinzelungsvorrichtung
- 21: Vibrationsförderband
- 22: Panade
- 23: Vorratsbehälter
- 24: Förderschnecke
- 25: Infrarot-Wärmestrahler
- 26: Vibrationsförderband
- 27: Kessel
- 28: Deckel
- 29: Fritteuse
- 30: Frittierfett
- 31: Einlassöffnung
- 32: Siebtrommel
- 33: Gewürz
- 34: Trichter

## Patentansprüche

1. Verfahren zur Weiterverarbeitung eines gepufften Lebensmittels auf Basis aufpoppbarer Samen,
**gekennzeichnet durch**
die Verfahrensschritte:
a) schlagartiges Erhitzen der aufgepoppten Samen innerhalb von etwa 30 Sekunden auf eine Röst-Betriebstemperatur zum Rösten der aufgepoppten Samen, wobei die Röst-Betriebstemperatur wenigstens 50% oberhalb der zum Aufpoppen der Samen erforderlichen Betriebstemperatur liegt und
b) schlagartiges Abschrecken der aufgepoppten und gerösteten Samen auf eine Temperatur unterhalb von 10°C innerhalb von etwa 30 Sekunden zum Beenden des Röstvorgangs.

2. Verfahren nach Anspruch 1, **gekennzeichnet durch** die zusätzlichen Verfahrensschritte:
c) Befeuchten der äußeren Oberfläche der aufgepoppten und gerösteten Samen;
d) Aufbringen einer Panade auf die befeuchtete äußere Oberfläche der aufgepoppten und gerösteten Samen;
e) Frittieren der aufgepoppten, gerösteten und panierten Samen in heißem Fett und
f) Aufbringen eines oder mehrerer Gewürze auf die äußere Oberfläche der aufgepoppten, gerösteten, panierten und frittierten Samen.

3. Verfahren nach Anspruch 2, **dadurch gekennzeichnet, dass** die aufgepoppten, gerösteten und panierten Samen vor dem Frittieren im Verfahrensschritt e) getrocknet werden.

4. Verfahren nach Anspruch 2 oder 3, **dadurch gekennzeichnet, dass** zum Befeuchten der äußeren Oberfläche der aufgepoppten und gerösteten Samen im Verfahrensschritt c) eine Eimasse verwendet wird.

5. Verfahren nach einem der Ansprüche 1 bis 4, **dadurch gekennzeichnet, dass** die Röst-Betriebstemperatur im Verfahrensschritt a) doppelt so hoch ist wie die zum Aufpoppen der Samen erforderliche Betriebstemperatur.

6. Verfahren nach einem der Ansprüche 1 bis 5, **dadurch gekennzeichnet, dass** als aufgepoppte Samen Maiskörner, vorzugsweise Puffmaiskörner, verwendet werden.

## Claims

1. Method for further processing a puffed foodstuff based on seeds capable of being popped open, **characterized by**
the method steps of:
a) suddenly heating the popped-open seeds within about 30 seconds to a roasting operating temperature to roast the popped-open seeds, wherein the roasting operating temperature is at least 50% above the operating temperature required to pop open the seeds, and
b) suddenly chilling the popped-open and roasted seeds to a temperature below 10°C within about 30 seconds to end the roasting process.

2. Method according to Claim 1, **characterized by** the additional method steps of:
c) moistening the outer surface of the popped-open and roasted seeds;
d) applying breading to the moistened outer surface of the popped-open and roasted seeds;
e) frying the popped-open, roasted and breaded seeds in hot fat and
f) applying one or more seasonings to the outer surface of the popped-open, roasted, breaded and fried seeds.

3. Method according to Claim 2, **characterized in that** the popped-open, roasted and breaded seeds are dried before the frying in method step e).

4. Method according to Claim 2 or 3, **characterized in that** liquid egg is used to moisten the outer surface of the popped-open and roasted seeds in method step c) .

5. Method according to any of Claims 1 to 4, **characterized in that** the roasting operating temperature in method step a) is twice as high as the operating temperature required to pop open the seeds.

6. Method according to any of Claims 1 to 5, **characterized in that** maize kernels, preferably popcorn kernels, are used as popped-open seeds.

## Revendications

1. Procédé de transformation d'un aliment soufflé à base de graines aptes à être soufflées,
**caractérisé par** les étapes suivantes :
a) chauffage brusque des graines soufflées, en environ 30 secondes, jusqu'à une température de fonctionnement de torréfaction, pour torréfier les graines soufflées, la température de fonctionnement de torréfaction étant située à au moins 50 % au-dessus de la température de fonctionnement nécessaire pour souffler les graines, et
b) refroidissement brusque en environ 30 secondes des graines soufflées et torréfiées, jusqu'à une température inférieure à 10 °C, pour terminer l'opération de torréfaction.

2. Procédé selon la revendication 1, **caractérisé par** les étapes supplémentaires suivantes :
c) humidification de la surface extérieure des graines soufflées et torréfiées,
d) application d'une panure sur la surface extérieure humidifiée des graines soufflées et torréfiées,
e) friture dans la graisse chaude des graines soufflées, torréfiées et panées et
f) application d'un ou plusieurs assaisonnements sur le surface extérieure des graines soufflées, torréfiées, panées et frites.

3. Procédé selon la revendication 2, **caractérisé en ce que** les graines soufflées, torréfiées et panées sont séchées avant la friture de l'étape e).

4. Procédé selon les revendications 2 ou 3, **caractérisé en ce qu'**une pâte à base d'oeuf est utilisée pour humidifier la surface extérieure des graines soufflées et torréfiées de l'étape c).

5. Procédé selon l'une des revendications 1 à 4, **caractérisé en ce que** la température de fonctionnement de torréfaction de l'étape a) est le double de la température de fonctionnement nécessaire pour le soufflage des graines.

6. Procédé selon l'une des revendications 1 à 4, **caractérisé en ce que** les graines soufflées utilisées sont des grains de maïs, de préférence des grains de maïs soufflés.
